# EUROPEAN PATENT APPLICATION

(11) **EP 4 793 299 A1**
(43) Date of publication of application: **19.08.2026**
(21) Application number: 24876944.0
(22) Date of filing: 26.08.2024
(51) Int. Cl.: C08F 290/06

(54) **PHOTOCURABLE SILICONE COMPOSITION**

(30) Priority: 11.10.2023 JP 2023176146
(71) Applicant: SHIN-ETSU CHEMICAL CO., LTD., Tokyo 100-0005 (JP)
(72) Inventor: KIMURA Shinji, Annaka-shi, Gunma 379-0224 (JP)
(74) Representative: Schicker, Silvia
(86) International application number: PCT/JP2024/030129
(87) International publication number: WO 2025/079344

(57) **Abstract**

The present invention is a photocurable silicone composition comprising: (A) organopolysiloxane represented by the formula (1); (B) an organic compound having an (meth)acrylic group, an epoxy group, and no alkoxysilyl group; (C) a photo-radical polymerization initiator; and (D) a silica powder having a BET specific surface area of 100 m²/g or more, wherein, in the component (A), a ratio of methyl groups bonded to a silicon atom to phenyl groups bonded to a silicon atom is 97:3 to 80:20. This can provide a photocurable silicone composition that is excellent in surface curability and deep curability and provides a low compression set.

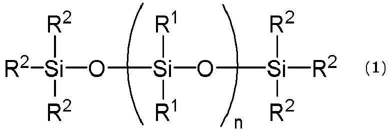

In the formula, R² represents a group represented by the formula (2), 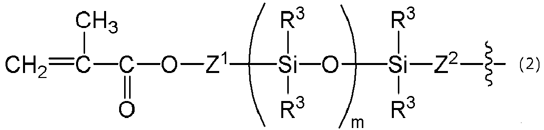 in the formula, R³ represents a methyl or phenyl group, Z¹ represents a divalent organic group, Z² represents an oxygen atom or a divalent organic group, and a line with a wave represents an attachment point.

## Description

### TECHNICAL FIELD

The present invention relates to a photocurable silicone composition that has preferable surface curability and preferable deep curability, provides a cured product having a low compression set, and is suitable for a liquid gasket material.

### BACKGROUND ART

Simplification and cost reduction in manufacturing processes, which coincide with the trend toward environmentally friendly, low-energy consumption, are being actively pursued in various fields. In particular, curable elastomers used in electronic or structural components have been required to be improved, as many of them require a high-temperature heating process for curing, which requires enormous amounts of energy, time, and equipment. Furthermore, improving the heating process is of great significance not only for energy and cost but also for manufacturing technologies without damaging other members.

To solve these problems, photocurable compositions have attracted attention in recent years. The photocurable composition, which contains a photoinitiator that is activated by light, especially ultraviolet ray, irradiation, undergoes a polymerization or crosslinking reaction by this initiator to be cured within a time as short as, typically, several tens of seconds to ten and some minutes. Accordingly, the photocurable composition hardly damages other members, and does not require large equipment. An ultravioletray irradiation device utilizing an LED has recently been developed, providing an excellent manufacturing process.

Silicone compositions using photoradical polymerization as a crosslinking system have been reported. This composition is characterized by a high reaction rate due to its high reactivity and cures in a short time. On the other hand, however, a radical of the composition has an extremely short lifetime and is easily deactivated by oxygen, etc. As a result, the curability on the surface contacted with the air of the silicon composition may be considerably reduced. At the same time, deep curability is also significant, and silicone compositions need to have a certain level of transparency so that light can reach inside.

Attempts have been made to use such photocurable compositions for liquid gasket materials. Among these, a method called cured-in-place gasket (CIPG) is suitable for producing gaskets that are produced in a wide variety in small quantities, and is a method in which a cured product is readily formed by light irradiation. This CIPG method involves forming a gasket material on one flange and then pressing it against the other flange to ensure a seal. For this reason, the gasket material must not lose its restoring force even after being compressed for a long period of time. In other words, a low compression set is required.

As a photocurable composition characterized by a low compression set, a composition containing a vinyl polymer having a (meth)acryloyl group and a compound having an ethylenically unsaturated group has been proposed, but the flexibility and durability of such a composition are insufficient when compared to those of silicone rubber (Patent Document 1).

In order to provide two properties, preferable surface curability and a low compression set, a silicone composition, to which fumed silica surface-treated with an organosilicon compound having a (meth)acryloyl group and with an organosilicon compound not having a (meth)acryloyl group has been added, has been proposed (Patent Document 2). However, because a condensation reaction is also used in order to increase surface curability, there is a problem that the storage stability of the composition is reduced.

### CITATION LIST

### PATENT LITERATURE

Patent Document 1: WO2007/004584A1
Patent Document 2: JP2018-058946A

### SUMMARY OF INVENTION

### TECHNICAL PROBLEM

The present invention was made in view of the above circumstances and has for its object to provide a photocurable silicone composition that is excellent in surface curability and deep curability and provides a low compression set.

### SOLUTION TO PROBLEM

To solve the above-described problems, the present invention provides a photocurable silicone composition comprising following components (A) to (D):
(A) organopolysiloxane represented by the following general formula (1): 100 parts by mass 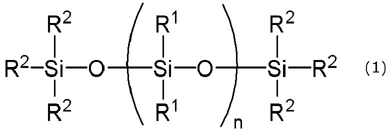
   wherein "n" represents an integer of 10 or more, R¹ independently represents a methyl group or a phenyl group, and R² represents a group represented by the following general formula (2), 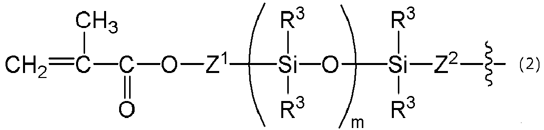
   wherein "m" represents an integer of 0 to 20, R³ independently represents a methyl or a phenyl group, Z¹ represents a substituted or unsubstituted divalent organic group having 1 to 10 carbon atoms, Z² represents an oxygen atom or a substituted or unsubstituted divalent organic group having 1 to 10 carbon atoms, and a line crossed by a wavy line represents an attachment point;
(B) an organic compound having an (meth)acrylic group, an epoxy group, and no alkoxysilyl group in one molecule: 0.1 to 10 parts by mass;
(C) a photo-radical polymerization initiator: 0.1 to 10 parts by mass; and
(D) a silica powder having a BET specific surface area of 100 m²/g or more: 0.1 to 50 parts by mass,
wherein, in the component (A), a ratio of methyl groups bonded to a silicon atom to phenyl groups bonded to a silicon atom is in the range of 97:3 to 80:20.

Such a photocurable silicone composition has a preferable surface curability due to the high density of photopolymerizable reactive groups at the terminals of the component (A). Furthermore, because the ratio of phenyl groups bonded to a silicon atom in the component (A) satisfies within the specified range, the difference in refractive index with other components becomes small, allowing light to penetrate deeper readily, and thereby imparting also excellent deep curability to the photocurable silicone composition. In addition, the silicone composition is characterized by a low compression set of the cured product to be obtained.

The component (B) is preferably an organic compound represented by the following general formula (3), 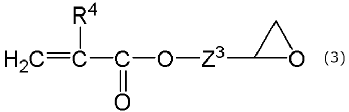 wherein R⁴ represents a hydrogen atom or a methyl group, and Z³ represents a substituted or unsubstituted divalent organic group having 1 to 10 carbon atoms.

By containing an organic compound having such a structure, the composition preferably adheres to the adherend without degrading the compression set.

In the present invention, the component (D) is preferably a silica powder surface-treated with an organic compound having a (meth)acryloyl group.

Such a silica powder can improve shape retainability without degrading the compression set.

Further, the present invention can provide a liquid gasket comprising the above-described photocurable silicone composition.

The cured product of the inventive photocurable silicone composition has adhesiveness and a low compression set, and thus can be used suitably as a liquid gasket material.

Further, a cured product of the inventive photocurable silicone composition preferably has a compression set of 30% or less, as determined after 100 hours at 25% compression at 120°C.

Such a cured product can exhibit more reliably the effects of the present invention.

### ADVANTAGEOUS EFFECTS OF INVENTION

As described above, by using the inventive photocurable silicone composition, the methacrylic groups densely incorporated at the molecular chain ends rapidly undergo a radical polymerization reaction upon light irradiation, thereby enabling overcoming the problem of uncured surface caused by oxygen inhibition, and it is also possible to obtain a cured product having excellent deep curability and a low compression set.

### DESCRIPTION OF EMBODIMENTS

As described above, it has been desired to develop a photocurable silicone composition that exhibits preferable surface curability and deep curability, provides a cured product having a low compression set, and is useful as a liquid gasket material.

As a result of his diligent study to achieve the above-described objects, the inventor found that a photocurable silicone composition, containing organopolysiloxane incorporated with the methacrylic groups densely at the molecular chain ends, a specific component imparting adhesiveness, a photo-radical polymerization initiator, and a silica powder, had preferable surface curability and preferable deep curability, and provided a cured product having a low compression set, and have completed the present invention.

That is, the present invention is a photocurable silicone composition comprising following components (A) to (D):
(A) organopolysiloxane represented by the following general formula (1): 100 parts by mass 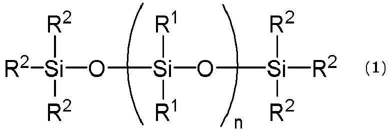
   wherein "n" represents an integer of 10 or more, R¹ independently represents a methyl group or a phenyl group, and R² represents a group represented by the following general formula (2), 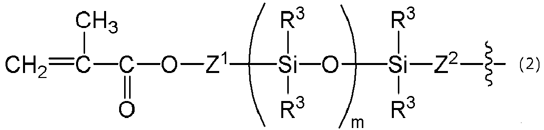
   wherein "m" represents an integer of 0 to 20, R³ independently represents a methyl or a phenyl group, Z¹ represents a substituted or unsubstituted divalent organic group having 1 to 10 carbon atoms, Z² represents an oxygen atom or a substituted or unsubstituted divalent organic group having 1 to 10 carbon atoms, and a line crossed by a wavy line represents an attachment point;
(B) an organic compound having an (meth)acrylic group, an epoxy group, and no alkoxysilyl group in one molecule: 0.1 to 10 parts by mass;
(C) a photo-radical polymerization initiator: 0.1 to 10 parts by mass; and
(D) a silica powder having a BET specific surface area of 100 m²/g or more: 0.1 to 50 parts by mass,
wherein, in the component (A), a ratio of methyl groups bonded to a silicon atom to phenyl groups bonded to a silicon atom is in the range of 97:3 to 80:20.

Hereinafter, the present invention is described in detail, but the invention is not limited thereto.

### <Component (A)>

The component (A) is an organopolysiloxane represented by the following general formula (1) and has multiple methacryl groups locally at the molecular chain ends, thereby obtaining good curability.

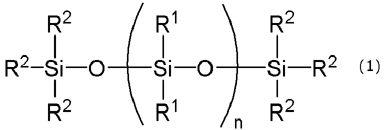

In the formula (1), "n" represents an integer of 10 or more, preferably 10 to 5000, and more preferably 100 to 1000. Within such a range, the composition has good processability before curing and flexibility after curing.

R¹ independently represents a methyl group or a phenyl group, and R² represents a group represented by the following general formula (2).

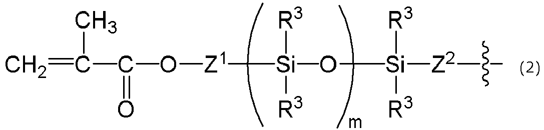

In the formula (2), "m" represents an integer of 0 to 20, preferably 0 to 5, and more preferably 0 or 1. Within such a range, the methacryl groups are fixed close to each other, resulting in good reactivity.

The R³ independently represents a methyl group or a phenyl group.

Z¹ represents a substituted or unsubstituted divalent organic group having 1 to 10 carbon atoms, and examples thereof include alkylene groups, such as a methylene group, an ethylene group, and a trimethylene group, which may further have a heteroatom, such as an oxygen atom, in the hydrocarbon chain. Among these, alkylene groups having 1 to 3 carbon atoms are preferable, and a trimethylene group is particularly preferable.

Z² represents an oxygen atom or a substituted or unsubstituted divalent organic group having 1 to 10 carbon atoms, and examples of the divalent organic group having 1 to 10 carbon atoms include alkylene groups, such as a methylene group, an ethylene group, and a trimethylene group. Among these, alkylene groups having 1 to 3 carbon atoms are preferable, and an ethylene group is particularly preferable.

The ratio, in the component (A), of methyl groups bonded to a silicon atom to phenyl groups bonded to a silicon atom is in the range of 97:3 to 80:20, preferably in the range of 95:5 to 90:10. Within this range, the refractive index is close to that of the component (C), which will be described later, and light penetrates deeper, resulting in good deep curability.

The component (A) is preferably in a liquid state with a viscosity at 25°C of 10 to 1,000,000 mPa·s. The viscosity may be measured, for example, using a rotational viscometer.

Specific examples of the component (A) are shown below. Here, C₆H₅ represents a phenyl group (the same applies hereinafter). The diorganosiloxane units may be arranged in any order.

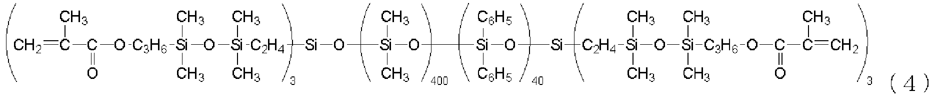

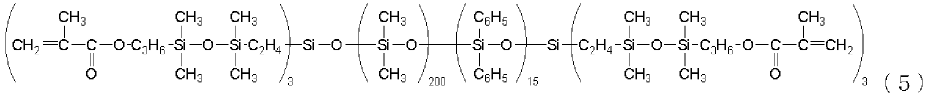

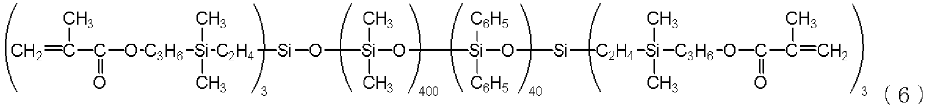

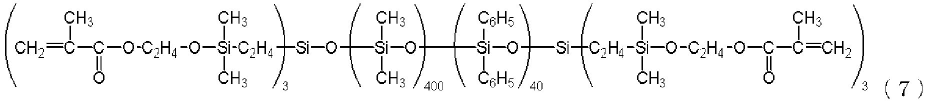

Such organopolysiloxanes can be produced by publicly known methods. For example, the polysiloxanes represented by the formulae (4) and (5) can be obtained as the hydrosilylation reaction product of a dimethylsiloxane-diphenylsiloxane copolymer with both molecular chain ends blocked with trivinylsiloxy groups and 3-(1,1,3,3-tetramethyldisiloxanyl)propyl methacrylate (CAS No. 96474-12-3).

The polysiloxane represented by the formula (6) can be obtained by performing a hydrosilylation reaction of a dimethylsiloxane-diphenylsiloxane copolymer with both molecular chain ends blocked with trivinylsiloxy groups and 3-(methacryloyloxypropyl)dimethylsilane.

The polysiloxane represented by the formula (7) can be obtained by reacting 2-hydroxyethyl methacrylate with the hydrosilylation reaction product of a dimethylsiloxane-diphenylsiloxane copolymer with both molecular chain ends blocked with trivinylsiloxy groups and chlorodimethylsilane.

One of these components (A) may be used, or two or more kinds thereof may be used in combination.

### <Component (B)>

The component (B) represents an organic compound having, in one molecule, a (meth)acrylic group, an epoxy group, and no alkoxysilyl group.

The component (B) has a methacryl group or an acrylic group, which is a photoradical reactive group, and an epoxy group, which has an effect of imparting adhesiveness, but does not have an alkoxysilyl group. By this, the component (B) has adhesiveness to the adherend without worsening the compression set.

The component (B) is preferably an organic compound represented by the following general formula (3).

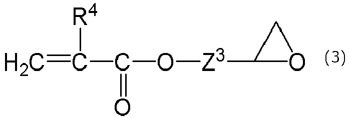

R⁴ represents a hydrogen atom or a methyl group, and Z³ represents a substituted or unsubstituted divalent organic group having 1 to 10 carbon atoms. Examples of Z³ include alkylene groups, such as a methylene group, an ethylene group, and a trimethylene group, and these may further have a heteroatom, such as an oxygen atom, in the hydrocarbon chain.

Specific examples of the component (B) are shown below.

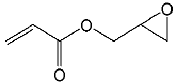

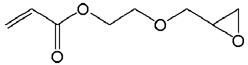

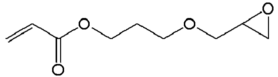

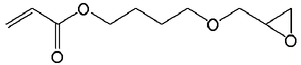

One of these components (B) may be used, or two or more kinds thereof may be used in combination.

The contained amount of the component (B) is 0.1 to 10 parts by mass, preferably 0.2 to 5 parts by mass, and more preferably 0.3 to 2 parts by mass, relative to 100 parts by mass of the component (A). When the contained amount is less than 0.1 parts by mass, the adhesiveness may be poor, and when it exceeds 10 parts by mass, the compression set of the cured product may increase.

### <Component (C)>

The component (C) is a photoradical polymerization initiator for promoting curing of the composition of the present invention by a radical polymerization reaction, and includes any photoradical polymerization initiator publicly known in the art for curing acrylic functionality, such as benzoin and substituted benzoins, Michle's ketone, dialkoxyacetophenone such as diethoxyacetophenone (DEAP), benzophenone and substituted benzophenones, acetophenone and substituted acetophenones, and xanthone and substituted xanthone.

Specific examples of the component (C) include 2,2-diethoxyacetophenone, 2,2-dimethoxy-1,2-diphenylethan-1-one (Omnirad 651, manufactured by IGM Resins B.V.), 1-hydroxy-cyclohexyl-phenyl-ketone (Omnirad 184, manufactured by IGM Resins B.V.), 2-hydroxy-2-methyl-1-phenyl-propan-1-one (Omnirad 1173, manufactured by IGM Resins B.V.), 2-hydroxy-1-{4-[4-(2-hydroxy-2-methyl-propionyl)-benzyl]-phenyl}-2-methyl-propan-1-one (Omnirad 127, manufactured by BASF, manufactured by IGM Resins B.V.), phenylglyoxylic acid methyl ester (Omnirad MBF, manufactured by IGM Resins B.V.), 2-methyl-1-[4-(methylthio)phenyl]-2-morpholinopropan-1-one (Omnirad 907, manufactured by IGM Resins B.V.), 2-benzyl-2-dimethylamino-1-(4-morpholinophenyl)-1-butanone (Omnirad 369, manufactured by IGM Resins B.V.), bis(2,4,6-trimethylbenzoyl)phenylphosphine oxide (Omnirad 819, manufactured by IGM Resins B.V.), 2,4,6-trimethylbenzoyl-diphenylphosphine oxide (Omnirad TPO H, manufactured by IGM Resins B.V.), and mixtures thereof.

Among the above-mentioned components (C), from the viewpoint of compatibility with the component (A), 2,2-diethoxyacetophenone, 2-hydroxy-2-methyl-1-phenyl-propan-1-one (Omnirad 1173, manufactured by IGM Resins B.V.), bis(2,4,6-trimethylbenzoyl)-phenylphosphine oxide (Omnirad 819, manufactured by IGM Resins B.V.), and 2,4,6-trimethylbenzoyl-diphenyl-phosphine oxide (Omnirad TPO H, manufactured by IGM Resins B.V.) are preferable.

The contained amount of the component (C) is 0.1 to 10 parts by mass, preferably 0.2 to 8 parts by mass, and more preferably 0.5 to 6 parts by mass, relative to 100 parts by mass of the component (A). When the contained amount of the component (C) is less than 0.1 parts by mass, the effect of promoting curing may not be obtained. When it exceeds 10 parts by mass, the deep curability of the composition may deteriorate, and the mechanical properties of the cured product may decrease.

### <Component (D)>

The component (D) is a silica powder having a BET specific surface area of 100 m²/g or more, and is a component that imparts shape retainability to the composition. This component ensures a thickness sufficient to maintain sealing performance when the inventive photocurable silicone composition is used as a liquid gasket material. The BET specific surface area is a value measured in accordance with JIS Z8830:2013 using a Macsorb (registered trademark) HM Model-1201 manufactured by Mountec Co., Ltd.

Because the component (D) is insoluble in the components (A), (B), and (C), it can hinder light transmission and reduce deep curability. However, by using a component with a large specific surface area, the light transmission can be improved. The upper limit of the BET specific surface area is preferably 500 m²/g or less, and particularly preferably 300 m²/g or less.

The component (D) is preferably wet silica or fumed silica, and more preferably silica that has been surface-treated with an organosilicon compound having a (meth)acryloyl group.

Specific examples of the component (D) include: Carplex CS-5 and Carplex CS-7 (manufactured by Evonik Japan Co., Ltd.); and Aerosil R-711 and Aerosil R-7200 (manufactured by Nippon Aerosil Co., Ltd.).

One of these components (D) may be used, or two or more kinds thereof may be used in combination.

The blending amount of the component (D) is 0.1 to 50 parts by mass, preferably 1 to 30 parts by mass, and more preferably 3 to 20 parts by mass, relative to 100 parts by mass of the component (A). When the blending amount of the component (D) is less than 0.1 parts by mass, it may not be possible to impart the desired shape retainability to the composition. When it exceeds 50 parts by mass, the deep curability of the composition may deteriorate.

### <Other Component>

Depending on the purpose, components other than the component (B), such as an adhesion promoter and a radical reaction control agent, may be added to the composition of the present invention.

As the adhesion promoter other than component (B), organic silicon compounds, such as silanes and siloxanes having a functional group that imparts adhesion, and non-silicone organic compounds are used.

More specifically, those that do not have a radical reactive group and an alkoxysilyl group simultaneously in one molecule are preferable, and examples thereof include trialkyl-isocyanurate, triallyl-isocyanurate, and glycidoxypropyltrimethoxysilane.

Examples of the radical reaction inhibitor include phenol-based radical reaction inhibitors, such as dibutylhydroxytoluene (BHT), and amine-based radical reaction inhibitors, such as diphenylamine derivatives.

### <Photocurable Silicone Composition>

The inventive photocurable silicone composition contains the above-mentioned components (A) to (D) and, as necessary, the other components.

The method for preparing the inventive photocurable silicone composition is not particularly limited and can be performed by mixing, stirring, and dispersing the components described above. The apparatus used for mixing, stirring, dispersing, etc., is not particularly limited, but it is possible to use an automatic mortar and pestle equipped with a stirring and heating device, a three-roll mill, a ball mill, a planetary mixer, a bead mill, etc. These equipment can also be used in combination as appropriate.

### <Liquid Gasket >

The inventive photocurable silicone composition cures readily due to its high reactivity, even in air when irradiated with the required light, and the cured product has a low compression set, making it useful as a liquid gasket. It is particularly useful in the CIPG method, in which a liquid gasket material is applied to one flange, cured and bonded by irradiation with light, and then the other flange is pressed against it to ensure a seal.

### <Cured Product>

The inventive photocurable silicone composition cures rapidly upon exposure to ultraviolet light.

In this case, examples of the light source for the ultraviolet light to be irradiated with include a UV-LED lamp, a high-pressure mercury lamp, an ultra-high-pressure mercury lamp, a metal halide lamp, a carbon arc lamp, and a xenon lamp, and those that emit light having a wavelength in the range of 220 to 400 nm can be suitably used.

The irradiation intensity of ultraviolet light is preferably 30 to 2,000 mW/cm², and the irradiation amount (integrated light quantity) is preferably 150 to 10,000 mJ/cm². The temperature during irradiation is preferably 10 to 60°C, more preferably 20 to 40°C.

The cured product obtained by curing the inventive photocurable silicone composition preferably has a compression set of 30% or less, as measured after 100 hours at 25% compression at 120°C. Such a cured product is particularly useful as a liquid gasket.

### EXAMPLE

Hereinafter, the present invention will be specifically described by showing Examples and Comparative Examples. However, the present invention is not limited to the following Examples. It should be understood that the abbreviations representing the respective siloxane units are as follows.

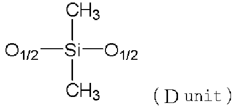

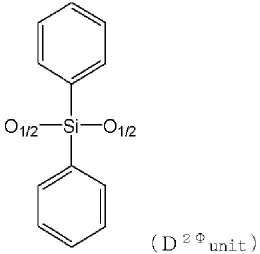

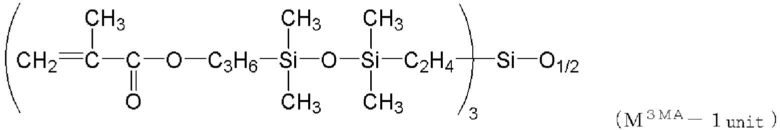

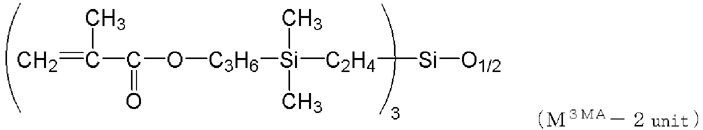

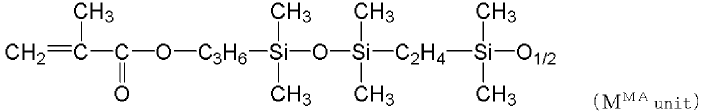

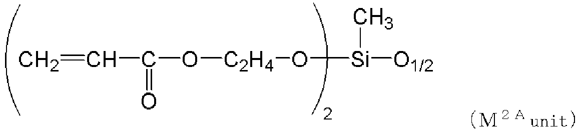

### [Examples 1 to 5 and Comparative Examples 1 to 5]

Photocurable silicone compositions were prepared by mixing the following components in the blending amounts shown in Table 1. The numerical values for each component in Table 1 are in parts by mass unless otherwise specified. The parenthesized values for the component (A) indicate the ratio, in the component (A), of methyl groups bonded to a silicon atom to phenyl groups bonded to a silicon atom.

### Component (A):

(A-1) Organopolysiloxane (methyl group: phenyl group = 90:10) having the ratio of M^{3MA}-1 unit:D unit:D^{2Φ} unit = 2:390:43 and a viscosity at 25°C of 10 Pa·s
(A-2) Organopolysiloxane (methyl group:phenyl group = 90:10) having the ratio of M^{3MA}-2 unit:D unit:D^{2Φ} unit = 2:390:43 and a viscosity at 25°C of 10 Pa·s
(A-3) Organopolysiloxane (methyl group:phenyl group = 95:5) having the ratio of M^{3MA}-1 unit:D unit:D^{2Φ} unit = 2:370:22 and a viscosity at 25°C of 5 Pa·s
(A'-4) Organopolysiloxane (methyl group:phenyl group = 100:0) having the ratio of M^{3MA}-1 unit:D unit = 2:530 and a viscosity at 25°C of 10 Pa·s
(A'-5) Organopolysiloxane (methyl group:phenyl group = 90:10) having the ratio of M^{MA} unit:D unit:D^{2Φ} unit = 2:390:43 and a viscosity at 25°C of 10 Pa·s
(A'-6) Organopolysiloxane (methyl group:phenyl group = 90:10) having the ratio of M^{2A} unit:D unit:D^{2Φ} unit = 2:390:43 and a viscosity at 25°C of 10 Pa·s

### (Component B):

(B-1) 4-Hydroxybutyl acrylate glycidyl ether
(B-2) Glycidyl acrylate
(B'-3) 3-Methacryloxypropyl trimethoxysilane

### (Component C): 2-Hydroxy-2-methyl-1-phenyl-propan-1-one (Omnirad 1173, manufactured by IGM Resins B.V.)

### Component (D):

(D-1) Aerogel R-711 (manufactured by Nippon Aerogel Co., Ltd., methacryloylsilane-treated fumed silica, BET specific surface area 150 m²/g)
(D-2) Carplex CS-5 (manufactured by Evonik Japan, wet silica, BET specific surface area: 130 m²/g)

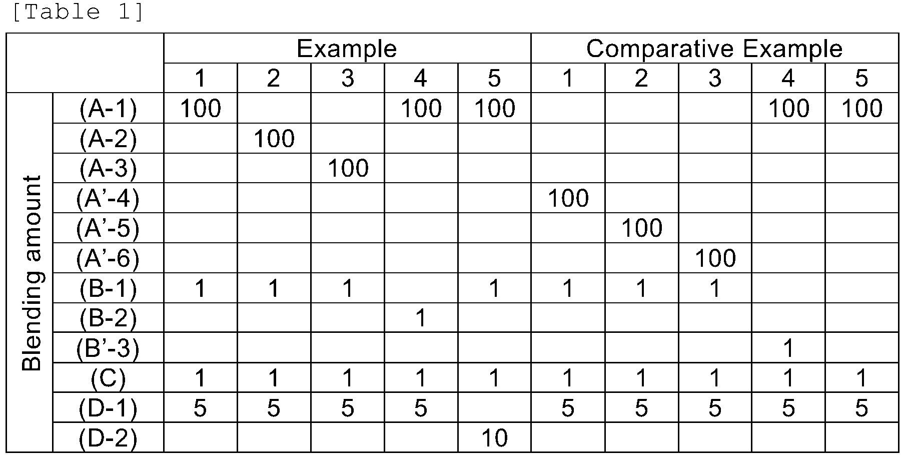

The photocurable silicone compositions obtained in Examples 1 to 5 and Comparative Examples 1 to 5, as shown in Table 1, were evaluated for surface curability, deep curability, hardness, adhesiveness, and a compression set as described below. The results are shown in Table 2. It should be understood that UV irradiation was performed in air at 25°C using a lamp H(M)06-L-61 manufactured by Eye Graphics Co., Ltd., at an irradiation amount of 7,500 mJ/cm².

### [Surface Curability]

The composition was poured into a mold to a thickness of 10 mm and irradiated with ultraviolet light from one side. When the irradiated surface had hardened, it was rated as "Good", and when even a part of the irradiated surface was liquid, it was rated as "Failure".

### [Deep Curability]

The composition was poured into a mold to a thickness of 10 mm and irradiated with ultraviolet light from one side. When the surface opposite the irradiated surface had hardened, it was rated as "Good", and when even a part of the opposite surface was liquid, it was rated as "Failure".

### [Hardness]

The composition was irradiated with UV light to produce a cured product with a thickness of 6.0 mm. The hardness immediately after curing was measured at 25°C using a Durometer Type A hardness tester.

### [Adhesiveness]

The composition was dropped onto a stainless steel plate, exposed to UV light, and then left to stand for 24 hours at 25°C. The cured product was then peeled off. Cohesive failure of the cured product was rated as "Adhered", while peeling at the interface was rated as "Delaminated".

### [Compression Set]

The composition was irradiated with ultraviolet light to produce a cured product with a thickness of 4 mm and a diameter of 25 mm. Three of these were stacked (the thickness at this point was designated as t₀), compressed to 9 mm, and held at 120°C for 100 hours. After completion of the compression, the product was held at 23°C for 30 minutes, and the thickness t was measured. The compression set (%) was calculated using the following formula. $\left({t}_{0}-t\right) / \left({t}_{0}-9.00\right) \times 100$

**[Table 2]**

| | Example | | | | | Comparative Example | | | | |
|---|---|---|---|---|---|---|---|---|---|---|
| | 1 | 2 | 3 | 4 | 5 | 1 | 2 | 3 | 4 | 5 |
| Surface curability | Good | Good | Good | Good | Good | Failure | Failure | Good | Good | Good |
| Deep curability | Good | Good | Good | Good | Good | Failure | Good | Good | Good | Good |
| Hardness | 20 | 21 | 18 | 20 | 24 | - | - | 25 | 20 | 20 |
| Adhesiveness | Adhered | Adhered | Adhered | Adhered | Adhered | - | - | Adhered | Adhered | Delaminated |
| Compression set | 15% | 16% | 15% | 15% | 12% | - | - | 32% | 46% | 13% |

As shown in Table 2, the photocurable silicone compositions of Examples 1 to 5 were indicated to be characterized by preferable surface curability, preferable deep curability, adhesiveness, and a low compression set of their cured products.

On the other hand, in Comparative Example 1, in which the component (A) was changed to an organopolysiloxane containing a low amount of phenyl groups bonded to a silicon atom, the surface curability and the deep curability were poor. In Comparative Example 2, in which the component (A) was changed to an organopolysiloxane having a low number of terminal functional groups, the surface curability deteriorated. In Comparative Example 3, in which the component (A) was changed to an organopolysiloxane whose terminal functional groups were acrylic groups, and in Comparative Example 4, in which the component (B) was changed to a compound with no epoxy group, the compression set of the cured product was large. Furthermore, in Comparative Example 5, in which the component (B) was not contained, no adhesion was exhibited.

Thus, the present invention can provide a photocurable silicone composition that has excellent surface curability, excellent deep curability, and adhesiveness, and provides a cured product having a low compression set.

The present invention includes the following embodiments.
[1]: A photocurable silicone composition comprising following components (A) to (D):
   (A) organopolysiloxane represented by the following general formula (1): 100 parts by mass 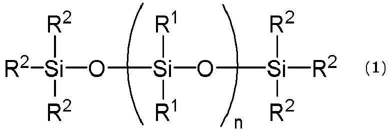
      wherein "n" represents an integer of 10 or more, R¹ independently represents a methyl group or a phenyl group, and R² represents a group represented by the following general formula (2), 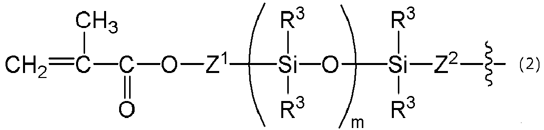
      wherein "m" represents an integer of 0 to 20, R³ independently represents a methyl or a phenyl group, Z¹ represents a substituted or unsubstituted divalent organic group having 1 to 10 carbon atoms, Z² represents an oxygen atom or a substituted or unsubstituted divalent organic group having 1 to 10 carbon atoms, and a line crossed by a wavy line represents an attachment point;
   (B) an organic compound having an (meth)acrylic group, an epoxy group, and no alkoxysilyl group in one molecule: 0.1 to 10 parts by mass;
   (C) a photo-radical polymerization initiator: 0.1 to 10 parts by mass; and
   (D) a silica powder having a BET specific surface area of 100 m²/g or more: 0.1 to 50 parts by mass,
   wherein, in the component (A), a ratio of methyl groups bonded to a silicon atom to phenyl groups bonded to a silicon atom is in the range of 97:3 to 80:20.
[2]: The photocurable silicone composition of the above [1],
   wherein the component (B) is an organic compound represented by the following general formula (3), 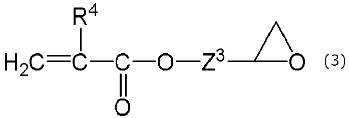
   wherein R⁴ represents a hydrogen atom or a methyl group, and Z³ represents a substituted or unsubstituted divalent organic group having 1 to 10 carbon atoms.
[3]: The photocurable silicone composition of the above [1] or [2],
   wherein the component (D) is a silica powder surface-treated with an organosilicon compound having a (meth)acryloyl group.
[4]: A liquid gasket comprising the photocurable silicone composition of any one of the above [1] to [3].
[5]: A cured product of the photocurable silicone composition of any one of the above [1] to [3],
   wherein the cured product has a compression set of 30% or less, as determined after 100 hours at 25% compression at 120°C.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A photocurable silicone composition comprising following components (A) to (D):
(A) organopolysiloxane represented by the following general formula (1): 100 parts by mass 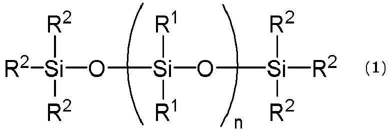
wherein "n" represents an integer of 10 or more, R¹ independently represents a methyl group or a phenyl group, and R² represents a group represented by the following general formula (2), 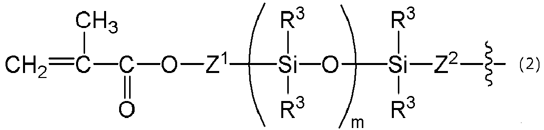
wherein "m" represents an integer of 0 to 20, R³ independently represents a methyl or a phenyl group, Z¹ represents a substituted or unsubstituted divalent organic group having 1 to 10 carbon atoms, Z² represents an oxygen atom or a substituted or unsubstituted divalent organic group having 1 to 10 carbon atoms, and a line crossed by a wavy line represents an attachment point;
(B) an organic compound having an (meth)acrylic group, an epoxy group, and no alkoxysilyl group in one molecule: 0.1 to 10 parts by mass;
(C) a photo-radical polymerization initiator: 0.1 to 10 parts by mass; and
(D) a silica powder having a BET specific surface area of 100 m²/g or more: 0.1 to 50 parts by mass,
wherein, in the component (A), a ratio of methyl groups bonded to a silicon atom to phenyl groups bonded to a silicon atom is in the range of 97:3 to 80:20.

2. The photocurable silicone composition according to claim 1,
wherein the component (B) is an organic compound represented by the following general formula (3), 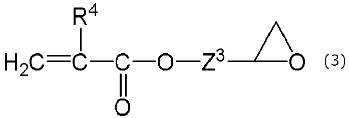
wherein R⁴ represents a hydrogen atom or a methyl group, and Z³ represents a substituted or unsubstituted divalent organic group having 1 to 10 carbon atoms.

3. The photocurable silicone composition according to claim 1,
wherein the component (D) is a silica powder surface-treated with an organosilicon compound having a (meth)acryloyl group.

4. A liquid gasket comprising the photocurable silicone composition according to any one of claims 1 to 3.

5. A cured product of the photocurable silicone composition according to any one of claims 1 to 3,
wherein the cured product has a compression set of 30% or less, as determined after 100 hours at 25% compression at 120°C.
